Europäisches Patentamt

European Patent Office

Office européen des brevets

(11) Publication number: **0 371 679**
**A1**

## (12) EUROPEAN PATENT APPLICATION

(21) Application number: 89312071.7

(22) Date of filing: 21.11.89

(51) Int. Cl.5: **C08K 5/05, C08L 33/06**

(30) Priority: 28.11.88 US 276850
25.07.89 US 385139

(43) Date of publication of application:
06.06.90 Bulletin 90/23

(84) Designated Contracting States:
AT BE CH DE ES FR GB GR IT LI LU NL SE

(71) Applicant: ROHM AND HAAS COMPANY
Independence Mall West
Philadelphia Pennsylvania 19105(US)

(72) Inventor: Roach, Donald Edward
23 Tidewater Lane
Willingboro New Jersey 08046(US)
Inventor: Keating, Paul Joseph
2727 Avenue A.
Newportville Pennsylvania 19056(US)

(74) Representative: Angell, David Whilton et al
ROHM AND HAAS (UK) LTD. European
Operations Patent Department Lennig House
2 Mason's Avenue
Croydon CR9 3NB(GB)

(54) Ultraviolet stabilisation of acrylic polymers.

(57) Alkyl methacrylate/alkyl acrylate polymers can be stabilised against degradation by ultraviolet light by the use of 0.5 to 2% non-polymerizable $C_1$-$C_{10}$ aliphatic alcohol and/or high boiling hydroxy compound.

EP 0 371 679 A1

## ULTRAVIOLET STABILISATION OF ACRYLIC POLYMERS

The present invention is concerned with the manufacture of acrylic polymer compositions which may be used to form plastics products which have enhanced resistance to ultraviolet radiation and weathering, particularly methacrylate-based products which show excellent transparency to ultraviolet radiation.

Ultraviolet radiation can cause methyl methacrylate polymers to deteriorate after as little as 100 hours of exposure. Ultraviolet radiation also tends to cause methyl methacrylate polymers to "yellow" which concomitantly reduces the ability of the polymer to transmit ultraviolet radiation. This reduction is undesirable especially in the sunbed industry because this usually reduces the efficiency of the tanning process.

Efforts have been made to solve the degrading effects of ultraviolet radiation on methyl methacrylate polymers by the incorporation of light stabilizers. For example, US-A-4550136 discloses the addition of sterically hindered amines (HALS) such as 2,2,6,6-tetramethyl-piperidine to the methyl methacrylate monomer prior to polymerization. Although this did increase resistance to ultraviolet radiation in the end polymer, it is too expensive.

An article by A.S. Belichenkol et al, entitled "On the Mechanism of Polymer Destruction under UV and Gamma Irradiation: The Influence of Low Molecular Weight Additives Related to Vibrational Cross-Relaxation", Sixth Symposium on Radiation Chemistry, (1986), pages 535-538, discloses the preparation of poly(methyl methacrylate) by bulk radical polymerization of monomer containing a minimum of 5% and up to 20% by weight of propyl alcohol. The resultant polymers showed improved resistance to ultraviolet radiation for short exposures of about 100 hours. Even as little as 5% propyl alcohol, however is disadvantageous to the physical and mechanical properties of such polymers and there is no suggestion in the disclosure that less might be effective. Indeed it is taught that higher propyl alcohol concentrations are the more effective in slowing down increase in UV-absorption.

By contrast, we have now surprisingly found that the resistance to degradation by ultraviolet radiation of copolymers of methyl methacrylate with one or more alkyl acrylate can be improved, without an unacceptable deterioration in other physical properties, by the incorporation of as little as 0.5% and not more than 2% of aliphatic alcohol and/or high boiling point hydroxy compound.

Accordingly this invention provides a process for the production of alkyl methacrylate/alkyl acrylate copolymers wherein from 0.5 to 2% by weight, based on the total weight of copolymer, of non-polymerisable stabiliser consisting of aliphatic alcohol containing up to 10 carbon atoms and/or high boiling hydroxy compound is incorporated in the copolymer as the sole ultraviolet radiation stabilizer.

As will be apparent to the skilled man, by "high boiling" we mean to indicate that the hydroxy compound will not volatilise with the highest boiling monomer in the polymer so that it will remain in the polymer for example during polymerisation and when residual monomer is stripped therefrom. In general we believe that a boiling point at one atmosphere somewhat above 100°C will be sufficient so that the hydroxy compound will not be removed along with residual methyl methacrylate or ethyl acrylate, the most commonly used monomers. However, if other monomers are used it will be apparent that a higher boiling hydroxy compound should be chosen.

The two categories of stabiliser mentioned above are not intended to be mutually exclusive. While we do not intend to be bound by theoretical considerations, it is believed that the presence and amount of hydroxy groups in the non-copolymerised stabiliser plays an important role. Therefore, in a process which does not involve high polymerisation temperatures or monomer stripping, such as cast cell polymerisation carried to substantial completion, a relatively low boiling aliphatic alcohol of low molecular weight (and therefore high -OH content) can be used. However, where the additive must withstand higher temperatures without substantially volatilising, a higher boiling stabiliser must be used, which, in turn implies a higher molecular weight. Then it is advisable, but not essential, to use a polyhydric compound so as to enhance the -OH level.

The stabiliser can be incorporated into the polymer by addition to the base monomer mix, to the polymer/monomer mixture at any stage during the polymerization or to the formed polymer while it is in the fluid state, in such an amount that between 0.5 and 2% will remain or is incorporated in the final, stabilised, solid polymer. It is however most convenient and preferred that the stabiliser be added either to the base monomer mix before commencement of polymerisation (the so-called "pre-addition process") or to the still-fluid polymer after removal of at least 50% residual monomer (the so-called "post-addition" process).

The polymer products of the invention can be formed into sheet or complex shaped articles and show surprisingly improved resistance to ultraviolet radiation. They may alternatively be formed into molding materials for use in, for example, the manufacture of melt calendered sheet products and complex molded articles.

In "pre-addition" therefore, the stabiliser plus any additional additives, such as chain transfer agents, can be admixed with the base monomer mix. Preferably, the alkyl methacrylate is methyl methacrylate (MMA), and the alkyl acrylate is preferably ethyl acrylate(EA). Other alkyl acrylates such as butyl acrylate and methyl acrylate also may be employed with (MMA). The methacrylate may usually constitute from about 90 percent of the monomer in the base mix. Correspondingly, up to about 10% alkyl acrylate may usually be included in the base mix. A frequently used monomer mix comprises about 96% methyl methacrylate and about 4% ethyl acrylate, by weight.

In pre-addition, about 0.5 to 2.0% of an aliphatic alcohol is added to the base mix. Preferably, one or more aliphatic primary or secondary alcohols are used, the most preferred being methyl and ethyl alcohols. If one or more high boiling point hydroxy compounds are used instead of, or in addition to the aliphatic alcohol, the most preferred are ethylene glycol, butyl lactate and glycerin. If a chain transfer agent is also added, it is preferred to use about 0.5% of n-dodecylmercaptan ("n-DDM") to control the molecular weight of the resultant polymeric material. Preferably, the amount of the chain transfer agent added to the base monomer mix composition is sufficient to produce a polymeric material with a weight average molecular weight of 100,000-500,000.

The base monomer mix plus additives may be formed into, for example, polymerized sheet products, by for example, standard cell casting techniques. Other techniques, such as emulsion polymerization and suspension polymerization also may be employed to provide UV-stablised polymerized produts.

### Pre-Addition: Examples 1-12

In accordance with the pre-addition embodiment of the invention, a base monomer mix of (MMA) and an alkyl acrylate such as ethyl acrylate (EA) was prepared. $C_1$-$C_{10}$ alcohols or high boiling point hydroxy compounds were added to the base mix. Cell cast sheet products were formed by agitating and pouring the mixtures of monomers and additives into a sealed mold. The mixture was heated to about 45-120C to substantially completely polymerize the base mix to substantive completion and provide cell cast sheet products of polymerized methyl methacrylate polymer (PMMA).

The effects of the stabilizers on the ultraviolet radiation resistance of the (PMMA) products so produced were determined by exposing the (PMMA) products to ultraviolet radiation over the wavelength range of 290-400 nanometers (NM) in accordance with ASTM standard G-53-84. Samples, measuring about 0.432 cm (0.170 inches) in thickness, were exposed to 290-320 (NM) ("UVB") radiation from a Phillips Corporation FS40 fluorescent lamp having a peak emission as 314 (NM) and a 1% of peak emission cutoff at 284 (NM). Additional samples of these (PMMA) products were exposed to the range of 315-400 (NM) ("UVA") radiation from a Q-Panel Corporation UVA-351 lamp having a peak emission at 314 (NM) and a 1% of peak emission cutoff at 280 (NM).

The radiation resistance of the (PMMA) products was evaluated by comparing, by means of a spectrophotometer, the percent total ultraviolet transmittance at wavelengths of 300 (NM) and 340 (NM) through the (PMMA) products both before and after exposure of the (PMMA) products of (UVA) and (UVB) ( radiation.

Further the effects of the stabilisers on yellowing of the so-produced (PMMA) compositions was also measured by comparing the yellow colours in the (PMMA) product before and after exposure to either (UVA) or (UVB) radiation. The result, referred to as the yellowness index (YI), was evaluated according to ASTM test method D1925.

The results are shown in Table I. together with details of the type and amount of stabiliser used in each Example. From these it is evident that the stabilised polymers retain an extremely high percentage of their transparency at 300 NM after 6000 hours of exposure to (UVA) radiation. For instance, the product of Example 3, using ethyl alcohol as stabiliser has a transmittance of 300 (NM) radiation of 84.3 percent before exposure and after exposure to (UVA) radiation for 6000 hours, transmittance of 76.9%; that is about 91.7% transmittance retention. However, as shown in comparative example 1, (PMMA) without stabiliser only retains about 40% of the transmittance at 300 (NM) of the unexposed (PMMA) product.

TABLE I

| Composition of Cell Cast (PMMA) | UNEXPOSED MATERIAL | | | 6000 Hours-(UVA) Expopsure | | | 6000 Hours - (UVB) Exposure | | |
|---|---|---|---|---|---|---|---|---|---|
| | % Total Transmittance of 300 (NM) | % Total Transmittance of 340 (NM) | (Y1) | % Total Transmittance of 300 (NM) | % Total Transmittance of 340 (NM) | Y1) | % Total Transmittance of 300 (NM) | % Total Transmittance of 340 (NM) | (Y1) |
| 1. Base Mix (Comparative) | 82.4 | 86.0 | 0.8 | 42.6 | 78.0 | 2.7 | 32.7 | 50.2 | 7.2 |
| 2. Base Mix + 1% $CH_3OH$ | 85.0 | 86.8 | 0.8 | 78.8 | 89.3 | 0.7 | 82.4 | 85.7 | 0.9 |
| 3. Base Mix + 0.5% $C_2H_5OH$ | 84.3 | 86.6 | 0.8 | 76.9 | 88.5 | 0.8 | 76.2 | 83.3 | 1.5 |
| 4. Base Mix + 1% $C_2H_5OH$ | 84.6 | 87.1 | 0.8 | 83.4 | 89.9 | 0.7 | 82.9 | 87.6 | 1.0 |
| 5. Base Mix + 2% $C_2H_4(OH)_2$ | 84.5 | 87.3 | 0.8 | 85.1 | 89.9 | 0.7 | 85.7 | 89.4 | 0.8 |
| 6. Base Mix + 0.5% $C_2H_4(OH)_2$ | 83.3 | 86.4 | 0.8 | 68.8 | 87.2 | 1.0 | 72.0 | 80.7 | 2.0 |
| 7. Base Mix + 1% $C_2H_4(OH)_2$ | 79.7 | 86.4 | 0.8 | 78.1 | 89.1 | 0.8 | 81.4 | 86.8 | 1.0 |
| 8. Base Mix + 1.0% $C_4H_9OH$ | 85.6 | 89.9 | 0.8 | 63.5 | 84.9 | 1.5 | | | |
| 9. Base Mix + 1% $C_6H_{13}OH$ | 85.3 | 89.5 | 0.8 | 48.6 | 80.4 | 2.4 | | | |
| 10. Base Mix + 1% $C_{10}H_{21}OH$ | 85.5 | 89.6 | 0.8 | 46.9 | 78.6 | 2.7 | | | |
| 11. Base Mix + 0.33% n-DDM + 1% $C_2H_5OH$ | 80.5 | 86.4 | 0.7 | 82.4 | 89.4 | 0.8 | 74.6 | 81.9 | 0.8 |
| 12. Base Mix + 0.33% N-DDM + 1% $C_2H_5OH$ | 81.2 | 86.1 | 0.7 | 79.1 | 88.5 | 0.8 | 66.6 | 76.3 | 0.8 |
| BASE MIX = 96% METHYL METHACRYLATE, 4% ETHYL ACRYLATE | | | | | | | | | |

EP 0 371 679 A1

Table II

| | % Transmittance at 300 NM after exposure to (UVA) for | | | % Transmittance at 300 NM after exposure to (UVB) for | |
|---|---|---|---|---|---|
| Example | Additive | 0 Hours | 1000 Hours | 0 Hours | 1000 Hours |
| 13. (Comparative) | none | 61.7 | 45.6 | 61.5 | 32.5 |
| 14. | 1% EG[1] | 60.6 | 53.2 | 59.7 | 46.7 |
| 15. | 1% DG[2] | 65.8 | 52.1 | 65.5 | 51.0 |
| 16. | 1% GL[3] | 66.0 | 51.5 | 65.3 | 47.3 |
| 17. | 1% BL[4] | 68.8 | 63.3 | 67.7 | 57.9 |

1. EG = ethylene glycol
2. DG = diethylene glycol
3. GL = glycerin
4. BL = butyl lactate

Pre-addition also may be employed to produce resin molding materials for use in the manufacture of injection molded components and melt calendered sheets. For example, (PMMA) sheet materials can be crushed into particles and extruded to provide pellets of molding resin materials. Alternatively, the stabilised Base Mix of monomers may be formed into molding resin materials by techniques such as emulsion polymerization and suspension polymerization.

POST-ADDITION: EXAMPLES 13 - 17

The "post-addition" technique mentioned above is particularly suitable for providing materials for molding and extrusion into complex articles such as covers for high intensity discharge lamps and involves incorporating the stabiliser into the polymerised material. Several methods may be used to achieve this. For example, the stabiliser may be added directly to the liquid polymer or incorporated into the polymer by treating the surface of solid polymer with the stabiliser at room temperature and thereafter melting the treated polymer. Post-addition may conveniently be performed at temperatures up to about 300° C but the stabiliser must have a high enough boiling point so that they are not lost by volatilization. High boiling point additives often conveniently employed include aliphatic alcohols which have 4 to 10 carbons, (this is an area of overlap between the two categories of stabiliser). High boiling point stabilisers which are especially preferred for adding to the polymer when liquid, include ethylene glycol, diethyl glycol, butyl lactate and glycerin.

In Examples 13 t 17 shown in Table II, the polymer is formed by heating a mixture of 95.5% methyl methacrylate (MMA), 4.5% ethyl acrylate (EA) with about 0.20% n-dodecyl mercaptan (n-DDM) as a chain transfer agent to provide a molecular weight of 100,000 to 500,000 with about 0.02% of a peroxide such as tert-butyl peroxide as a polymerization catalyst. The mixture is heated to a temperature and for a time sufficient to cause at least fifty percent conversion to polymer. Thereafter the residual monomers were removed, as is generally preferred, prior to post addition of the stabiliser. The stabilisers are preferably applied after substantially all of the residual monomers have been removed from the polymer. The stabiliser was applied to the liquid polymer just prior to solidification.

Preferably, the stabilisers are applied while the liquid polymer is at a temperature of 200° C to about 250° C. Alternatively, the additives may be post-added to the polymer by applying them to the (PMMA) at ambient temperature and then heating the polymer to about its glass transition temperature, preferably with agitation, to incorporate the stabiliser into polymer.

The effects of the stabilisers on the ultraviolet radiation resistance of the polymer products produced by post-addition were determined in Examples 13 to 17 were determined as in Examples 1 to 12.

The polymeric materials formed by post-addition, as shown in Table II, retain a surprisingly high transmittance after exposure to ultraviolet radiation. For instance Example 14 shows that post-addition of one percent of ethylene glycol to the polymer provides a material which has an original transmittance to 300 NM (UVA) of 60.6% and retains a transmittance to 300 NM (UVA) of 53.2% after 1000 hours exposure to 300 NM (UVA); that is an 87.78% retention of its original transmittance. In contrast, in comparative example 13 the retention level is only 73.9% of the original transmittance at 300 NM.

## Claims

1. A process for the production of alkyl methacrylate/alkyl acrylate copolymers wherein from 0.5 to 2% by weight, based on the total weight of copolymer, of non-polymerisable stabiliser consisting of aliphatic alcohol containing up to 10 carbon atoms and/or high boiling hydroxy compound is incorporated into the copolymer as the sole ultraviolet radiation stabilizer.

2. A process as claimed in Claim 1 wherein the incorporation of the stabiliser is effected by adding an appropriate amount thereof to the monomer mixture from which the polymer is to be formed or to the polymer, while still in a fluid state, after any step of removal of residual monomer.

3. A process as claimed in Claim 1 wherein the incorporation is effected by applying the stabiliser to the polymer when solid and subsequently melting the polymer.

4. The use of non-polymerisable aliphatic alcohol having up to 10 carbon atoms and/or high boiling hydroxy compound as the sole ultraviolet stabilizer in an alkyl methacrylate/alkyl acrylate copolymer, in an amount of 0.5 to 2% by weight based on the total copolymer.

6

5. Alkyl acrylate/alkyl methacrylate copolymer containing 0.5 to 2% by weight of non-polymerised aliphatic alcohol having up to 10 carbon atoms and/or high boiling hydroxy compound as the sole ultraviolet stabiliser.

6. A process, polymer or use as claimed in any preceding Claim wherein the copolymer comprises units of (1) methyl methacrylate, ethyl methacrylate, methyl acrylate and/or butyl methacrylate, and (2) ethyl acrylate and/or butyl acrylate.

7. A process polymer or product as claimed in any preceding Claim wherein the ultraviolet stabilizer comprises ethylene glycol, glycerin, butyl lactate and/or diethylene glycol.

8. A process polymer or product as Claimed in any preceding Claim wherein the polymer has a weight average molecular weight of 100,000 to 500,000.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 169 298 (VYSOKA SKOLA CHEMICKO TECHNOLOGICKA) * Claims 1-2 * | 1-8 | C 08 K 5/05 C 08 L 33/06 |
| A | SOV. J. OPT. TECHNOL., vol. 53, June 1986, pages 361-362; E. EREMEEVA et al.: "Effect of low-molecular-weight additives on the radiation strength of transparent polymers" * Page 361, table 1 * | 1-8 | |

TECHNICAL FIELDS SEARCHED (Int. Cl.5)

C 08 K
C 08 L

The present search report has been drawn up for all claims

| Place of search | Date of completion of the search | Examiner |
|---|---|---|
| THE HAGUE | 28-02-1990 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)